# EUROPEAN PATENT SPECIFICATION

(11) **EP 1 624 612 B1**
(45) Date of publication and mention of the grant of the patent: **06.02.2008**
(21) Application number: 05014722.2
(22) Date of filing: 07.07.2005
(51) Int. Cl.: H04L 12/18

(54) **Method and apparatus for dealing with a user request for leaving or zapping a multicast channel**
Verfahren und Vorrichtung zum Behandeln von Benutzeranfragen zum Verlassen oder Wechseln eines Multicast-Kanals
Méthode et appareil pour traiter une requête d'utilisateur d'abandon ou de zap d'un canal de multidiffusion

(30) Priority: 05.08.2004 CN 200410053433
(43) Date of publication of application: 08.02.2006
(73) Proprietor: Alcatel Lucent, 75008 Paris (FR)
(72) Inventor: Lu, LinLi, Jinqiao 2001206 Shanghai (CN); Wang, YongMing, Jinqiao 2001206 Shanghai (CN); Ze, Chao, Jinqiao 2001206 Shanghai (CN); Chen, Xiao, Jinqiao 2001206 Shanghai (CN)

(56) References cited:
- EP-A- 1 119 134
- EP-A- 1 359 709

## Description

The present invention relates to multicast services, and more specifically to a method for dealing with a request from a user for leaving a multicast service channel and a network access apparatus thereof.

With the development of network, various services, such as E-mail, TELNET, FTP, WWW being the point-to-point data transmission, have been developed on the network platforms; however, the video meeting, on-the-spot concert, live rebroadcast and the like on the Internet are more expected, which are the services with large data amount. They are typically in the manners of point-to-multipoint or multipoint-to-multipoint data transmission for saving bandwidth, so that the IP multicast communication technology is necessary. In an access network using Ethernet technology, the multicast service and the video service are becoming more and more widely employed services. These services tend to have the high requirements for the response speed. When a user zaps multicast service channels frequently, the apparatus must respond to it as fast as possible and quickly provide the user with desired video data. For a large-scale access apparatus, the apparatus and the network bear a larger load for dealing with the frequent signal of zapping channels from enormous quantities of user. The IGMP for controlling user to access multicast group itself has not given the solution about it, so that the apparatus and the network must have a high capability to deal with these problems, otherwise the response speed to user's requests can not be ensured during peaking load if the apparatus and the network lacks the capability.

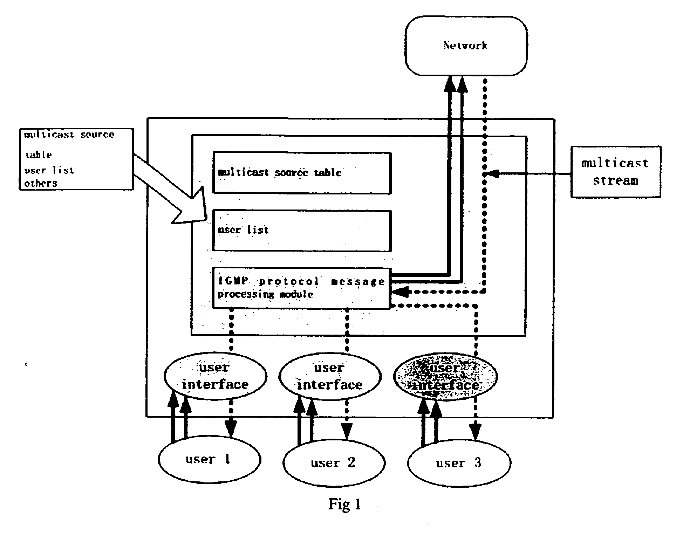

Fig.1 is a structural schematic diagram of an access apparatus in multicast service. As shown in Fig.1, an access apparatus acts as a router for a user and a user for the network. The access apparatus represents users connected to apply a multicast video service to the network. Multicast data stream sent down from the network is copied for a plurality of users via the access apparatus. When requesting M1 multicast service, a user sends an IGMP joining message for joining the M1 multicast service channel to an access apparatus. The access apparatus analyzes the user's IGMP request while searching the relevant information of the user and the requested multicast group to confirm whether the user has the right to obtain the multicast service. After judging that the user can obtain the multicast service, the access apparatus adds a port of the user into a user list of the M1 multicast group. Hence, when reaching the access apparatus, the data stream of the M1 multicast service sent from network can be copied according to the user list of the access apparatus and sent to the corresponding users. Meanwhile, the function of the access apparatus here is an IGMP proxy, therefore, the access apparatus act as a host with respect to the network side. That is, when a user connected to an access apparatus requests for a multicast service but the corresponding multicast data stream is not available on the access apparatus, the access apparatus will send an IGMP joining message to network to request for obtaining the multicast service.

The normal process of user's zapping multicast service channels, for example switching from M1 multicast service channel to M2 channel, is as follows:
1) A user sends an IGMP leaving message for leaving M1 multicast service channel to an access apparatus.
2) The user sends an IGMP joining message for obtaining M2 multicast service to the access apparatus, the interval between the IGMP joining message and leaving message sent by the user is typically very short, for example 0.02 second or less.
3) When receiving the request from the user for leaving M1, the access apparatus sends two group specific query messages with a certain interval, and deletes the user from the user list of M1 multicast group if no reply from the user is received during this interval.
4) If finding that the user is the last user of the multicast group of M1 multicast service in the access apparatus, the access apparatus sends an IGMP leaving message to the network to request that the network stops sending M1 multicast data stream to the access apparatus, while deleting a multicast retransmission table from hardware.
5) When receiving a request from the user for joining M2 multicast service channel, the access apparatus adds the user into the user list of M2 multicast group.
6) If finding that the user is the first user of the multicast group of M2 multicast service in the access apparatus, the access apparatus sends an IGMP joining message to the network to request M2 multicast service, while writing a multicast retransmission table into hardware.

As shown from the above process, in the case that users' quantity is enormous and multicast services are zapped frequently, the following problems will take place:
1) Access apparatus will send IGMP joining messages or leaving messages to the network frequently according to users' requirements, so that the flow of network is increased and the load of the router or the multicast server of the network becomes heavier.
2) Access apparatus will create or delete the multicast retransmission tables to/from hardware frequently, these operations are typically time-consuming and influencing apparatus performances, resulting in slow system response even collapsing of the apparatus sometimes.
3) When still other users request M1 multicast service channel, the access apparatus must send an IGMP joining message once more to the network to request the multicast service because M1 multicast service has not existed in the access apparatus yet.
   Therefore, the users have to wait for a network response period in order to receive the multicast service, meaning that the access apparatus responses slowly to user's request for zapping channels.

The solution of the prior art for the problems due to user's frequent zapping is modifying the parameters of the multicast protocol state machine of an apparatus so as to reduce network load, for example prolonging the interval between receiving IGMP leaving message and sending specific group inquiring message. In a local area network, however, the parameters of the multicast protocol state machine are typically recommended to be set in a unified way to ensure the compatibility and the cooperation with other network apparatuses, so that the state parameters of an apparatus are typically not recommended to be modified alone. The unitary modification of the parameters of whole network apparatuses will influence the response speed of whole network system.
A method of deleting a multicast group is disclosed in EP-A 1 119 134.

In view of the foregoing, the object of this invention is to provide a solution capable of reducing effectively the channel zapping load in the multicast service. This object is solved by the method of claim 1 and by the apparatus of claim 8. The solution employs a slow leaving mechanism to reduce the load of channel zapping without the necessity to modify the parameters of the protocol state machine set in a unified way, thus not influencing the response speed of whole network, and not increasing the cost of apparatus either.

The invention provides a method for dealing with a request from a user for leaving a multicast service channel with a slow leaving mechanism, comprising the steps of:
1) deleting the user sending the request from a user list of the requested multicast group;
2) judging whether the user is the last user of the multicast group of the multicast service channel, if "no", then the method ending ; if "yes", setting the multicast group into an unused state for a period of a reserve time, then going to step 3);
3) judging whether a request from any user for joining the multicast service channel is received within the period of the reserve time, if "yes", setting the multicast group to an active state and adding the user into the user list of the multicast group, then the method ending ; if "no", going to step 4);
4) deleting the multicast group, sending a request for leaving the multicast service channel to network, then the method ending.

As stated above, wherein in step 3), it is possible to set the multicast group into an active state and reset the reserve time to zero, as soon as a request from any user for joining the multicast service channel is received within the period of reserve time;
wherein said reserve time is set according to a priority of the multicast group, a longer reserve time is set for a multicast group having a higher priority, and a shorter reserve time is set for a multicast group having a lower priority;
wherein the method further comprises step 5): when bandwidth of the network interface or the multicast group resources of an apparatus are not enough, the apparatus deletes some multicast groups in the unused state to release system resources. When the unused multicast groups are deleted, a sequence for deleting said some multicast groups in the unused state is determined according to their priorities of the multicast groups. A multicast group having the lowest priority will be deleted first, and other groups can be handled by analogy accordingly.

The invention also provides a method for dealing with a request from a user for zapping a multicast service channel with a slow leaving mechanism, comprising steps of:
judging a request from the user is a request for leaving a multicast service channel or a request for joining a multicast service channel;
if it is a leaving request, then
   a) deleting the user sending the leaving request from a user list of the multicast group of the requested multicast service channel;
   b) judging whether the user is the last user of the multicast group of the multicast service channel, if "no", the method ending; if "yes", setting the multicast group into an unused state for a period of reserve time, then going to step c);
   c) judging whether a request from any user for joining the multicast service channel is received within the period of reserve time expires, if "yes", setting the multicast group into an active state, then the method ending ; if "no", going to step d);
   d) deleting the multicast group and sending a request for leaving the multicast service channel to a network, then the method ending ;
if it is a joining request, then
   e) judging whether the multicast group of the multicast service channel exists, if "yes", going to step f); if "no", going to step g);
   f) adding the user into the user list of the multicast group;
   g) creating the multicast group, setting the group to an active state, adding the user into the user list of the multicast group, and sending to a request for joining the multicast service channel to the network, then the method ending .

The invention provides also a network access apparatus which supports multicast service, comprising a network interface module and a user interface module, the network access apparatus further comprises a unit for dealing with a request from a user for leaving a multicast group of a multicast service channel, said unit being adapted to delete the user sending the request from a user list of the requested multicast group, said unit being adapted to set the multicast group into an unused state for a period of a reserve time if the user sending the leaving request via the user interface module is the last user of the multicast group of the multicast service channel; said unit being adapted to set the multicast group into an active state and to add the user into the list of the multicast group if there is any user requesting for joining the multicast service channel via the user interface module within the period of the reserve time; otherwise, said unit being adapted to delete the multicast group and to send a request for leaving the multicast service channel via the network interface module to the network.

As stated above, wherein the unit includes:
first judging means for judging whether the user sending the request for leaving via the user interface module is the last user of the multicast group of the requested multicast service channel;
second judging means for judging whether there is any user requesting for joining the multicast service channel via the user interface module within the period of reserve time;
first state setting means for setting the multicast group into the unused state for the period of reserve time if a judging result of the first judging means is "yes", changing the multicast group from the unused state into the active state if a judging result of the second judging means is "yes", and changing the multicast group from the unused state into a deleted state at the end of the reserve time if the judging result "yes" of the second judging means is not received within the period of reserve time;
first network interface means for sending the request for leaving the multicast service channel to the network via the network interface module according to the changing result of the first state setting means which changes the multicast group from the unused state into the deleted state.

The invention also provides a network access apparatus which supports multicast service, comprising a network interface module and a user interface module, the network access apparatus further comprises a unit for dealing with a request from a user for zapping a multicast service channel, wherein the unit judges whether a request from the user received via the user interface module is a request for leaving a multicast service channel or a request for joining a multicast service channel, in the case of a leaving request, the unit sets the multicast group into an unused state for a period of reserve time if the user sending a leaving request is the last user of the multicast group of the multicast service channel, the unit sets the multicast group into an active state if there is any user requesting for joining the multicast service channel via the user interface module within the period of reserve time, otherwise, the unit deletes the multicast group and sends a request for leaving the multicast service channel to the network via the network interface module; in the case of a joining request, if the requested multicast group does not exist, the unit creates the multicast group, while sending a request for joining the multicast service channel to network via the network interface module.

As stated above, wherein the unit includes:
a unit for dealing with a request from a user for leaving a multicast service channel,
a unit for dealing with a request from a user for joining a multicast service channel,
user-request judging means for judging whether the request from the user received via the user interface module is a request for leaving the multicast service channel or a request for joining the multicast service channel, and determining which one of the unit for dealing with a request from a user for leaving a multicast service channel and the unit for dealing with a request from a user for joining a multicast service channel will deal with the request; wherein
the unit for dealing with a request from a user for leaving a multicast service channel, includes:
   first judging means for judging whether the user sending the request via the user interface module is the last user of the multicast group of the requested multicast service channel;
   second judging means for judging whether there is any user requesting for joining the multicast service channel via the user interface module within the period of reserve time;
   first state setting means for setting the multicast group into the unused state for a period of reserve time if the judging result of the first judging means is "yes", changing the multicast group from the unused state into an active state if the judging result of the second judging means is "yes", and changing the multicast group from the unused state into a deleted state at the end of the reserve time if the judging result "yes" of the second judging means is not received within the period of reserve time;
   first network interface means for sending the request for leaving the multicast service channel to the network via the network interface module according to the changing result of the first state setting means which changes the multicast group from the unused state into the deleted state, and
   the unit for dealing with a request from a user for joining a multicast service channel, includes:
      third judging means for judging whether the multicast group of the requested multicast service channel exists; second state setting means for creating the multicast group if the judging result of the third judging means is "no", and setting the group into the active state;
      second network interface means for sending the request for joining the multicast service channel to the network via the network interface module if the judging result of the third judging means is "no".

The advantages of the invention are summarized as follows:
1) The load for dealing with IGMP protocol message at network side is reduced significantly by using this method.
2) It is unnecessary to modify the parameters of other apparatuses on network, only software of the access apparatus is changed.
3) Hardware in the current network frame is not changed, so that the cost for the current corresponding access network apparatus hardly increases.

- Fig.1: is a structural schematic diagram of an access apparatus in multicast service;
- Fig.2: is a flow chart of the method for dealing with a request from a user for leaving a multicast service channel according to the invention;
- Fig.3: is a flow chart of the method for dealing with a request from a user for zapping a multicast service channel according to the invention;
- Fig.4: is a structural block diagram of a unit for dealing with a request from a user for leaving a multicast service channel according to the invention;
- Fig.5: is a structural block diagram of a unit for dealing with a request from a user for zapping a multicast service channel according to the invention.

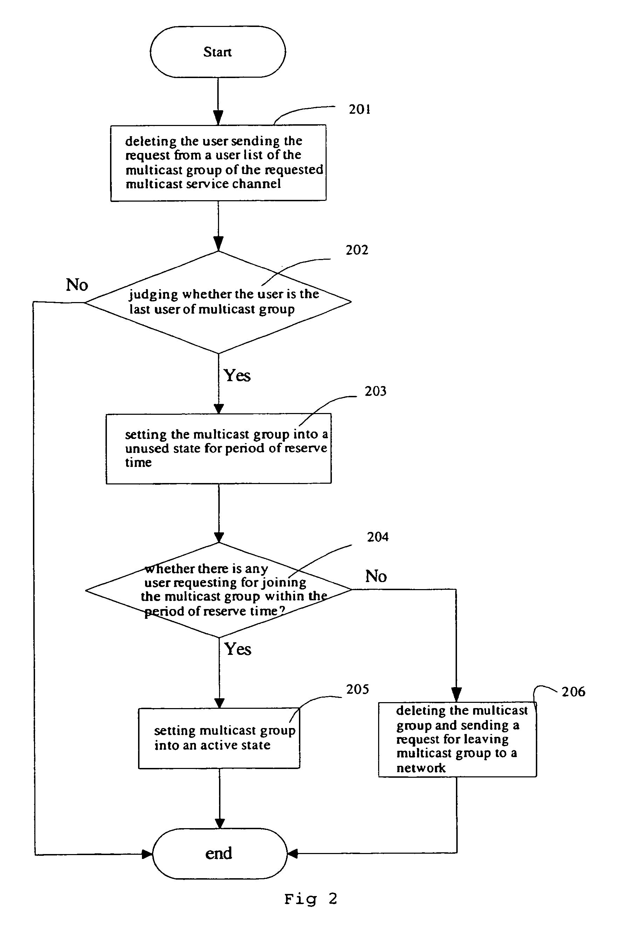

Now the invention will be described with reference to the accompanying drawings and the preferred embodiments. Fig.2 is a flow chart of the method for dealing with a request from a user for leaving a multicast service channel according to the invention.

By incorporating Fig.1 and 2 and taking an access apparatus implementing multicast service with IGMP protocol as an example, the method for dealing with a request from a user for leaving a multicast service channel with a slow leaving mechanism according to the invention will be described in detail.

When receiving via an IGMP agent an IGMP leaving message sent by a user, for example user 1, which is a request from user 1 for leaving a multicast service channel, firstly, an access apparatus determines that the user has left the multicast service channel by sending a specific group inquiring message to the user, then it deletes the user sending the request, i.e. user 1 from a user list of the multicast group of the requested multicast service channel (step 201), so that user 1 will not receive a multicast data stream of the multicast group. Next, the access apparatus judges whether user 1 is the last user of the multicast group of the multicast service channel (step 202), if "no", it is unnecessary to take operation any more and the method ends; if "yes", it sets the multicast group into the unused state in a period of reserve time (step 203) and the method goes to step 204. In this embodiment, each multicast group has an IGMP state machine, being a software module, for recording the states of the multicast group and implementing the changing between various states of the multicast group according to certain external conditions. In the prior art there are only two states of multicast group, i.e. an active state and a deleted state; and in the invention, a new state, i.e. an unused state, is introduced. For example, provided that the variable of an original multicast group state has 1 bit, to which 0 or 1 is assigned, 0 means to be deleted and 1 means to be set to an active state. Now this variable is defined to have 2 bits whose valuation is newly defined, a new value, for example 2 ("10" in binary system), is added to represent the unused state. In step 202, the IGMP state machine of a multicast group determines whether there is a state changing of the multicast group by judging whether user 1 is the last user of the multicast group, the multicast group is changed from an active state ("01") to an unused state ("10") in the IGMP state machine if user 1 is the last user. That is, the triggering condition for changing from the active state into the unused state is that the user sending the request for leaving is the last user of the multicast group. In the unused state, the state of the access apparatus with respect to the network side is not changed, so that the multicast data stream of the multicast group can still be received from network but is not sent to any user. A timer can be actuated simultaneously to setting the multicast group into the unused state to control the reserve time of the unused state to be prolonged or shortened, ensuring that the multicast group is set to the unused state in a period of the reserve time.

Next, the access apparatus judges whether an IGMP joining message from any user, for example user 2, for joining the multicast service channel is received within the period of reserve time (step 204), if "yes", the state device sets the multicast group into the active state again (step 205), and the method ends; if "no", the access apparatus deletes the multicast group and sends an IGMP leaving message for leaving the multicast service channel to the network (step 206), and then the method ends. That is, within the set period of reserve time, if there is any user (including the original user 1 requesting for leaving), for example user 2, requesting for joining the multicast service, the multicast group will be set again from the unused state into the active state in the IGMP protocol state machine of the multicast group. That is, the triggering condition for changing from the unused state into the active state is that there is other user requesting for joining the multicast service channel within the period of reserve time. In this process, the state of the access apparatus with respect to the network side is not changed. If there is no user requesting for joining the multicast service channel within the set period of reserve time, the access apparatus considers that the multicast service is not required by any user any more and deletes the multicast group, that is, in IGMP protocol state machine, the multicast group can be set to the deleted state ("00") by using, for example, a reset signal sent by the timer when its timing ends, that is, the triggering condition for changing from the unused state to the deleted state is that there is no user requesting for joining the multicast service channel within the period of reserve time. The access apparatus will refresh the system with a certain interval, after refreshing, the system deletes the multicast group in the "deleted state", then the multicast group will not exist. While setting the multicast group into the deleted state, the access apparatus sends an IGMP leaving message for leaving the multicast service channel to network, and the network stops sending the data stream of the multicast service to the access apparatus after a while. In this embodiment, a timer controls the reserve time of the unused state, but a delayer can also control the reverse time by using "leaving requesting signal of the last user".

In step 204, the multicast group may be set again into the active state as soon as the request from user 2 for joining the multicast service channel is received within the period of reserve time, and the reserve time is reset to zero at the same time, which can be implemented by resetting the timer ahead of time, so that the response speed to user's request of an access apparatus can be improved.

This invention is mainly focused on step 203, 204 and 205. The core principle of the invention is introducing a new state of a multicast group, i.e. unused state, with a slow leaving mechanism and setting a certain period of reserve time so as to shield the requests from a part of users for zapping the multicast service channel and release the network load due to users' frequent zapping.

Different reserve time can be defined for different types of multicast groups. Longer reserve time may be set for the multicast group having a higher priority, and shorter reserve time may be set for the multicast group having a lower priority. Some multicast groups which are used frequently and the service of which has higher priorities may be arranged in advance in a multicast source table by operating company, and some multicast groups which are not used frequently and the service of which has lower priorities may not be arranged in this table. Therefore, a longer reserve time can be set for a multicast group which is arranged in the multicast source table and are requested frequently by users, and a shorter reserve time can be set for a multicast group which is not arranged in the table, so that it can be avoided that after the slow leaving mechanism is introduced, the multicast groups in the unused state retaining in the apparatus occupy more resources.

When bandwidth of network interface or the multicast group resources of the apparatus are not enough, the apparatus can delete some multicast groups in the unused state to release system resources. That is, even if the period of reserve time set for the multicast groups in the unused state does not expire, the IGMP state machine can change these groups from the unused state to the deleted state ahead of time to release resources if the apparatus lacks resources. That is, another triggering condition for changing from unused state into deleted state is that it is necessary to release resources owing to being lack of them. Meanwhile, in order to ensure the optimum arrangement of resources, when necessary, the multicast groups should be deleted according to their priorities, the multicast group having the lowest priority will be deleted first, and other groups can be handled by analogy accordingly.

Meanwhile, a method for dealing with a request from a user for zapping a multicast service channel with a slow leaving mechanism can be obtained according to the method for dealing with a request from a user for leaving a multicast service channel with a slow mechanism of the invention.

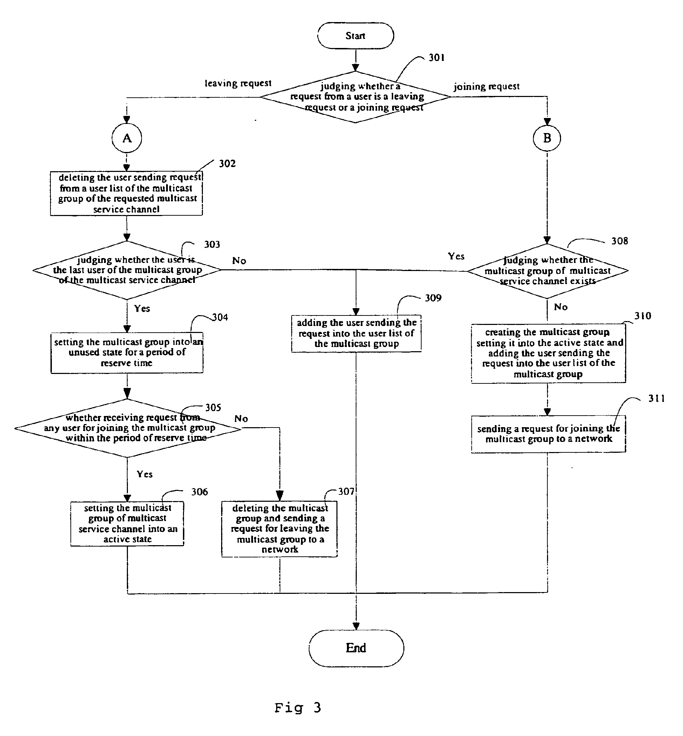

Fig.3 is a flow chart of the method. By incorporating Fig.3 and taking an access apparatus implementing multicast service with IGMP as an example, the method for dealing with a request from a user for zapping a multicast service channel will be described in detail.
Supposing that user 1 (the last user of the multicast group of M1) requests to leave M1 multicast service channel, and user 2 then requests to join M1, user 2 being the user who earliest requests for joining M1 after user 1 leaves. First, user 1 sends an IGMP leaving message for leaving M1 multicast service channel to an access apparatus, and then user 2 sends an IGMP joining message for joining M1 multicast service channel to the access apparatus.

When receiving a request from a user, the access apparatus judges whether the request from the user is a request for joining a multicast service channel or a request for leaving a multicast service channel (step 301). When receiving a request from user 1 for leaving M1 multicast service channel, the access apparatus actuates process A which is a process for dealing with a request for leaving; when receiving a request from user 2 for joining M1 multicast service channel, the access apparatus actuates process B which is a process for dealing with a request for joining. In this embodiment process A and process B are actuated early and lately respectively but run in parallel.

When receiving a request from user 1 for leaving M1 multicast service channel, the access apparatus actuates process A which is a process for dealing with a request for leaving: the access apparatus deletes the user sending the request, i.e. user 1, from a user list of the multicast group of the requested M1 multicast service channel ( step 302 ), so that user 1 will not receive the multicast data stream of M1 multicast service channel. Then the access apparatus judges whether user 1 is the last user of the multicast group of M1 multicast service channel (step 303), if "yes", the access apparatus sets the multicast group into an unused state in a period of reserve time (step 304). In this embodiment, because user 1 is the last user of M1, M1 is set into the unused state in step 304. After step 304 the access apparatus still receives the multicast data stream of M1 from network but does not send it to any user. In step 304 the unused state and the reserve time are set in the same manner as that in step 203. Then the access apparatus judges whether any requests from other users for joining M1 are received within the period of reserve time (step 305), if "yes", the access apparatus sets again the multicast group of M1 into an active state (step 306), and then the method ends; if "no", the access apparatus deletes the multicast group of M1 and sends an IGMP leaving message for leaving M1 to network (step 307), and then the method ends. In this embodiment, user 2 requests for joining M1 multicast service channel, if receiving a request from user 2 for joining M1 within the reserve time, which means that the judging result of step 305 is "yes", the access apparatus sets again the multicast group of M1 from unused state into the active state. If receiving a request from user 2 for joining M1 after the period of reserve time expires, the access apparatus deletes the multicast group of M1 and sends an IGMP leaving message for leaving M1 multicast service channel to the network, wherein in step 306 and 307 the state of multicast group is changed in the same manner as that in step 205 and 206.

When receiving a request from user 2 for joining M1 multicast service channel, the access apparatus actuates process B which is a process for dealing with a request for joining: the access apparatus judges whether the multicast group of M1 exists (step 308), if "yes", the access apparatus adds the user sending the request into the user list of the multicast group (step 309), if "no", the access apparatus creates a multicast group of M1, sets the multicast group of M1 into an active state, adds the user sending the request into the user list of the multicast group ( step 310 ) and sends an IGMP joining message for joining M1 multicast service channel to the network ( step 311 ). In this embodiment, if the access apparatus receives a request from user 2 for joining M1 within the period of reserve time, the multicast group of M1 is in the unused state but is not deleted, so that the judging result of step 308 is still "yes", at that time the process A goes to step 305 and the judging result of step 305 is "yes", and then the multicast group of M1 is set again into the active state (step 306). If the access apparatus receives a request from user 2 for joining M1 after the period of reserve time expires, at that time the judging result of step 305 in process A is "no", the access apparatus deletes the multicast group of M1 and sends a message for leaving M1 to the network (step 307), so that the multicast group of M1 has been deleted, the judging result of step 308 is "no", meaning that the network does not send multicast data stream of M1 to the access apparatus, the access apparatus creates the multicast group, add the user into the user list of the multicast group ( step 310 ) and send again an IGMP joining message for joining M1 multicast service to network ( step 311 ).

Meanwhile, a network access apparatus for dealing with a request from a user for leaving a multicast service with a slow leaving mechanism can be obtained according to the embodiment. By incorporating Fig.1 and taking an access apparatus implementing multicast service with IGMP protocol as an example, the function and the structure of the access apparatus will be described in detail. As show in Fig.1, the access apparatus comprises a network interface module, a user interface module and an IGMP module, wherein the network interface module is used to send messages for leaving and joining a multicast service channel to the network, and the user interface module is used to communicate with users and to receive request from user. The IGMP module comprises an IGMP protocol message processing module, a multicast source table, a user list and the like. In this embodiment, the IGMP message processing module may further comprise a unit for dealing with a request from a user for leaving a multicast service channel, the unit sets the multicast group into an unused state in a period of reserve time if the user sending a request for leaving via the user interface module is the last user of the multicast group of the multicast service channel, and the unit sets the multicast group to an active state if there is a user requesting for joining the multicast service channel via the user interface module within the period of reserve time; otherwise the unit deletes the multicast group and sends a message for leaving the multicast service channel to the network via the network interface module. When bandwidth of the network interface or the multicast group resources of the apparatus are not enough, the unit for dealing with a request from a user for leaving a multicast service channel can delete some multicast groups in the unused state to release system resources.

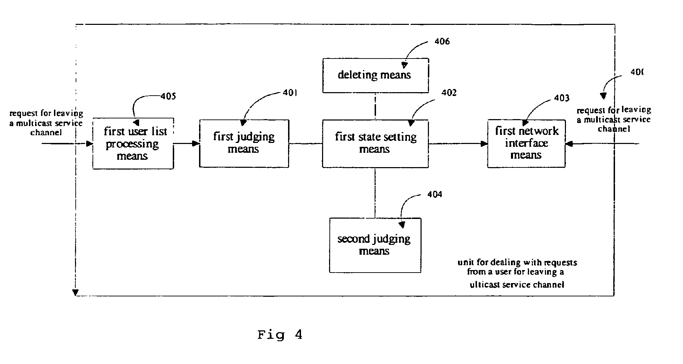

Fig.4 is a detailed structural block diagram of the unit. As shown in Fig.4, unit 400 comprises first judging means 401, first state setting means 402, first network interface means 403 and second judging means 404. When receiving a request sent by a user via the user interface module for leaving a multicast service channel, first judging means 401 judges whether the user sending the request is the last user of the requested multicast group of the multicast service channel. First state setting means 402 receives the judging result of first judging means 401 and sets the multicast group into an unused state in a period of reserve time if the judging result of first judging means 401 is "yes". Second judging means 404 judges whether there is any user requesting for joining the multicast service channel via the user interface module within the period of reserve time. First state setting means 402 also receives the judging result of second judging means 404 and changes the multicast group from the unused state into an active state if the judging result of second judging means 404 is "yes", or changes the multicast group from the unused state into a deleted state after the period of reserve time expires if not receiving the judging result "yes" of second judging means 404 within the period of reserve time, that is, there is no user requesting for joining the multicast service channel within the period of reserve time. First network interface means 403 sends a message for leaving the multicast group to the network via the network interface module according to the changing result of first state setting means 402 which changes the multicast group from the unused state into the deleted state. In first state setting means 402, the reserve time of the unused state can be controlled to be longer or shorter by a timer which is actuated at the same time as setting the multicast group into the unused state, so that the multicast group is set into the unused state within the period of reverse time. The state of the multicast group is set into the active state by a judging signal sent by second judging means 404 before the timing of the timer ends at the same time the timer is reset. The state of the multicast group is set into a deleted state with a resetting signal sent by the timer when its timing ends. In addition, the reverse time can also be controlled in other way, such as by a delayer. This unit for dealing with a request may further include first user list processing unit 405 for adding a user into the user list of the multicast group of the requested multicast service channel, and deleting means 406 for seeking some multicast groups in the unused state and changing them from the unused state into a deleted state ahead of time via first state setting means 402 when bandwidth of the network interfaceor the multicast group resources of the apparatus are not enough. Then first network interface means 403 sends a message for leaving the multicast group to the network via the network interface module according to the changing result of first state setting means 402 which changes these multicast groups from the unused state into the deleted state. According to the priorities of the multicast groups, the deleting unit can seek a multicast group having the lowest priority and delete it firstly, other multicast groups can be handled by analogy in order to ensure the optimum arrangement of resources.

In this embodiment, the unit for dealing with a request from a user for leaving a multicast service channel is provided in an IGMP protocol message processing module, but it can be provided outside of the IGMP protocol message processing module as a separate unit, as long as it can implement the function of dealing with a request from a user for leaving multicast service with a slow leaving mechanism.

A network access apparatus for dealing with a request from a user for zapping a multicast service channel with a slow leaving mechanism can be obtained. Similarly, by incorporating Fig.1 and taking an access apparatus effecting multicast service with IGMP protocol as an example, the function and the structure of the access apparatus will be described in detail. Similarly, this apparatus comprises a network interface module, a user interface module and an IGMP module, the IGMP protocol module comprises an IGMP protocol message processing module, a multicast source table, a user list and like. In this embodiment, the IGMP protocol message processing module further comprises a unit for dealing with a request from a user for zapping a multicast service channel, the unit judges whether the request from the user received via the user interface module is a request for leaving a multicast service channel or a request for joining a multicast service channel, in the case of a leaving request, the unit sets the multicast group into the unused state in a period of reserve time if a user sending a leaving request is the last user of the multicast group of the multicast service channel, the unit sets the multicast group into an active state if there is any user requesting for joining the multicast service channel via the user interface module within the period of reserve time, otherwise, the unit deletes the multicast group and sends a message for leaving the multicast service channel to the network via the network interface module; in the case of a joining request, if the requested multicast group does not exist, the unit creates the multicast group while sending a message for joining the multicast service channel to the network via the network interface module. When bandwidth of the network interface or the multicast group resources of the apparatus are not enough, the unit for dealing with a request from a user for zapping a multicast service channel can delete some multicast groups in the unused state to release the system resources.

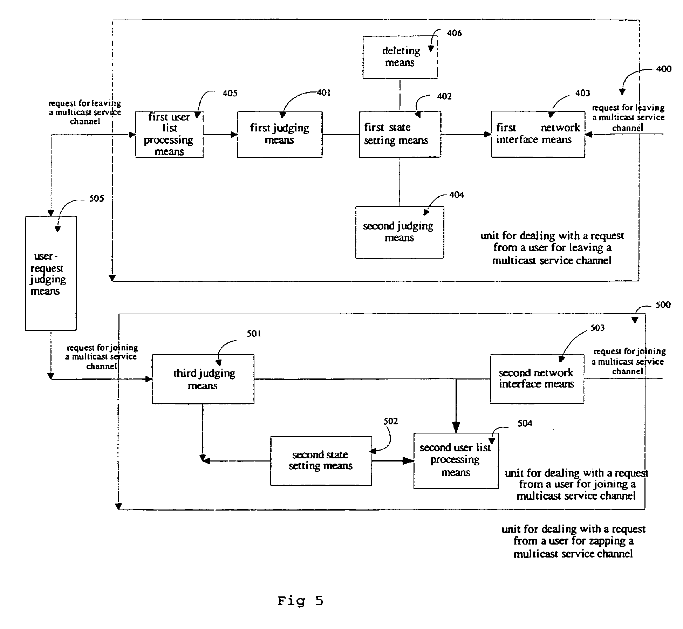

Fig.5 is a detailed structural block diagram of the unit. As shown in Fig.5, the unit comprises user request judging means 505, unit 400 for dealing with a request from a user for leaving a multicast service channel and unit 500 for dealing with a request from a user for joining a multicast service channel, wherein user request judging means 505 judges whether a request from the user received via the user interface module is a request for leaving a multicast service channel or a request for joining a multicast service channel, and determines which one of the unit for dealing with a request from a user for leaving a multicast service channel and the unit for dealing with a request from a user for joining a multicast service channel will deal with the request, the request from the user for leaving the multicast service channel is assigned to unit 400 for dealing with a request from a user for leaving multicast service channel to deal with, the request from the user for joining the multicast service channel is assigned to unit 500 for dealing with a request from a user for joining a multicast service channel to deal with. Unit 400 for dealing with a request from a user for leaving a multicast service channel includes first judging means 401, first state setting means 402, first network interface means 403 and second judging means 404, the functions of which being described in detail as above, unit 400 may further include first user list processing means 405 for adding a user into the user list of the multicast group of the requested multicast service channel and deleting means 406 for seeking some multicast groups in the unused state and changing them from an unused state into the deleted state ahead of time via first state setting means 402 when bandwidth of the network interface or the multicast group resources of the apparatus are not enough . Unit 500 for dealing with a request from a user for joining a multicast service channel includes third judging means 501, second state setting means 502 and second network interface means 503, wherein third judging means 501 judges whether the multicast group of the requested multicast service channel is deleted; second state setting means 502 receives the judging result of third judging means 501, creates a multicast group if the judging result of third judging means 501 is "no" and sets the group into the active state; second network interface means 503 receives the judging result of third judging means 501, sends a request for joining the multicast service channel to network via the network interface module if the judging result of third judging means 501 is "no"; wherein unit 500 for dealing with a request from a user for joining multicast service channel can further include second user list processing means 504 for adding a user into the user list of the multicast group of the requested multicast service channel, which adds directly a user into the user list of the multicast group of the requested multicast service channel if the judging result of third judging means 501 is "yes", and adds a user into the user list of the multicast group after creating the multicast group if the judging result of third judging means 501 is "no".

In this embodiment, the unit for dealing with a request from a user for switching s multicast service channel is provided in an IGMP protocol message processing module, but it can also be provided outside of the IGMP protocol message processing module as a separate unit, as long as it can implement the function of dealing with a request from a user for zapping a multicast service with a slow leaving mechanism.

With the above description, by employing the solution of the invention, the problems such as the heavy network load and slow system response due to users' frequent zapping channels in the current multicast service of the prior art can be solved, and the cost for implementing the solution is low and the solution has a wide adaptability, because the invention changes only software and so has no relation with hardware and operating platform.

Above description represents the preferred embodiments of the invention only and is not intended for defining the scope of the invention, it is apparent to those skilled in the art that the invention can be modified in various manner without departing from the scope of the invention.

## Claims

1. A method for dealing with a request from a user for leaving a multicast group of a multicast service channel with a slow leaving mechanism at a network access apparatus, comprising the steps of:
1) deleting (201) the user sending the request from a user list of the requested multicast group;
2) judging (202) whether the user is the last user of the multicast group of the multicast service channel, if "no", then the method ending; if "yes", setting (203) the multicast group into an unused state for a period of a reserve time, then going to step 3);
3) judging (204) whether a request from any user for joining the multicast service channel is received within the period of the reserve time, if "yes", setting (205) the multicast group into an active state and adding the user into the user list of the multicast group, then the method ending ; if "no", going to step 4);
4) deleting (206) the multicast group, sending a request for leaving the multicast service channel to a network, then the method ending.

2. The method according to claim 1, wherein in step 3) the multicast group is set into the active state while the reserve time is reset to zero, as soon as a request from any user for joining the multicast service channel is received within the period of the reserve time.

3. The method according to claim 1, wherein said reserve time is set according to a priority of the multicast group, and a longer reserve time is set for a multicast group having a higher priority.

4. The method according to claim 1, further comprising step 5): when bandwidth of the network interface is not enough, deleting some multicast groups in the unused state.

5. The method according to claim 4, wherein in said step 5) a sequence for deleting some multicast groups in the unused state is determined according to their priorities, and a multicast group in the unused state having a lower priority is deleted prior to one having a higher priority.

6. The method according to claim 1, further comprising the steps of:
judging (321) whether a request from the user is a request for leaving the multicast service channel or a request for joining the multicast service channel;
if it is a joining request, then
6) judging (308) whether the requested multicast group of the multicast service channel exists, if "yes", going to step 7); if "no", going to step 8);
7) adding (309) the user into the user list of the multicast group, then the method ending;
8) creating (310) the multicast group, setting the group into an active state and adding the user into the user list of the multicast group, while sending (311) to the network a request for joining the multicast service channel, then the method ending.

7. The method according to claim 1, wherein the method employs Internet Group Management Protocol IGMP to implement the multicast service.

8. A network access apparatus which supports multicast service, comprising a network interface module and a user interface module, wherein the network access apparatus further comprises a unit for dealing with a request from a user for leaving a multicast group of a multicast service channel, said unit being adapted to delete the user sending the request from a user list of the requested multicast group, said unit being adapted to judge whether the user is the last user of the multicast group of the multicast service channel, said unit being adapted to set the multicast group into an unused state for a period of a reserve time if the user sending the leaving request via the user interface module is the last user of the multicast group of the multicast service channel, said unit being adapted to judge whether a request from any user for joining the multicast group is received within the period of the reserve time, said unit being adapted to set the multicast group into an active state and to add the user into the list of the multicast group if there is any user requesting for joining the multicast service channel via the user interface module within the period of the reserve time, otherwise, said unit being adapted to delete the multicast group and to send a request for leaving the multicast service channel via the network interface module to a network.

9. The network access apparatus according to claim 8, wherein when bandwidth of the network interface is not enough, said unit for dealing with a request from a user for leaving a multicast service channel being adapted to delete some multicast groups in the unused state.

10. The network access apparatus according to claim 8, wherein the unit for dealing with a request from a user for leaving a multicast service channel includes:
first judging means being adapted to judge whether the user sending the request for leaving via the user interface module is the last user of the multicast group of the requested multicast service channel;
second judging means being adapted to judge whether there is any user requesting for joining the multicast service channel via the user interface module within the period of reserve time;
first state setting means being adapted to set the multicast group into the unused state for the period of the reserve time if a judging result of the first judging means is "yes", to change the multicast group from the unused state into the active state if a judging result of the second judging means is "yes", and to change the multicast group from the unused state into a deleted state at the end of the period of the reserve time if the judging result "yes" of the second judging means is not received within the period of the reserve time;
first network interface means being adapted to send a request for leaving the multicast service channel to the network via the network interface module according to the changing result of the first state setting means which changes the multicast group from the unused state into the deleted state.

11. The network access apparatus according to claim 8 wherein the unit for dealing with a request from a user being adapted to judge whether the request from the user received via the user interface module is a request for leaving the multicast service channel or a request for joining the multicast service channel, in case of the joining request, if the requested multicast group does not exist, the unit being adapted to create the multicast group, while sending the request for joining the multicast service channel to the network via the network interface module.

12. The access apparatus according to claim 11, wherein the unit for dealing with a request from a user includes:
a unit being adapted to deal with a request from a user for joining a multicast service channel; and
user-request judging means being adapted to judge whether the request from the user received via the user interface module is a request for leaving the multicast service channel or a request for joining the multicast service channel, and to determine which one of the unit for dealing with a request from a user for leaving a multicast service channel and the unit for dealing with a request from a user for joining a multicast service channel will deal with the request; wherein
the unit for dealing with a request from a user for joining a multicast service channel includes:
third judging means being adapted to judge whether the multicast group of the requested multicast service channel exists;
second state setting means being adapted to create the multicast group if the judging result of the third judging means is "no", and to set the group into the active state;
second network interface means being adapted to send the request for joining the multicast service channel to the network via the network interface module if the judging result of the third judging means is "no".

## Patentansprüche

1. Verfahren zum Behandeln einer Benutzeranforderung zum Verlassen einer Multicast-Gruppe eines Multicast-Dienstkanals mit einem langsamen Anmeldemechanismus, beinhaltend die Schritte,
1) den Benutzer, der die Anforderung sendet, aus einer Benutzerliste der angeforderten Multicast-Gruppe zu löschen (201),
2) zu beurteilen (202), ob der Benutzer der letzte Benutzer der Multicast-Gruppe des Multicast-Dienstkanals ist, wobei im Fall "nein" das Verfahren endet und im Fall "ja" die Multicast-Gruppe für eine Reservezeitspanne in einen unbenutzten Zustand versetzt (203) und dann mit Schritt 3) fortgefahren wird,
3) zu beurteilen (204), ob eine Anforderung eines beliebigen Benutzers zur Anmeldung beim Multicast-Dienstkanal innerhalb der Reservezeitspanne empfangen wird, im Fall "ja" die Multicast-Gruppe in einen aktiven Zustand zu versetzen (205) und den Benutzer der Benutzerliste der Multicast-Gruppe hinzuzufügen, wobei das Verfahren anschließend endet, und im Fall "nein" mit Schritt 4) fortzufahren, und
4) die Multicast-Gruppe zu löschen (206) und eine Anforderung zur Abmeldung vom Multicast-Dienstkanal an das Netzwerk zu senden, wobei das Verfahren anschließend endet.

2. Verfahren gemäß Anspruch 1, wobei in Schritt 3) die Multicast-Gruppe in den aktiven Zustand versetzt wird, während die Reservezeit auf null zurückgesetzt wird, sobald innerhalb der Reservezeitspanne von einem beliebigen Benutzer eine Anforderung zur Anmeldung beim Multicast-Dienstkanal empfangen wird.

3. Verfahren gemäß Anspruch 1, wobei die besagte Reservezeit entsprechend einer Priorität der Multicast-Gruppe festgelegt und eine längere Reservezeit für eine Multicast-Gruppe mit einer höheren Priorität eingestellt wird.

4. Verfahren gemäß Anspruch 1, ferner beinhaltend den Schritt 5), einige im unbenutzten Zustand befindliche Multicast-Gruppen zu löschen, wenn die Bandbreite der Netzwerkschnittstelle nicht ausreicht.

5. Verfahren gemäß Anspruch 4, wobei im besagten Schritt 5) eine Sequenz zum Löschen einiger im unbenutzten Zustand befindlicher Multicast-Gruppen entsprechend ihren Prioritäten festgelegt und eine im unbenutzten Zustand befindliche Multicast-Gruppe mit einer niedrigeren Priorität vor einer solchen mit einer höheren Priorität gelöscht wird.

6. Verfahren gemäß Anspruch 1, ferner beinhaltend die Schritte,
zu beurteilen (321), ob eine Anforderung vom Benutzer eine Anforderung zum Abmelden vom Multicast-Dienstkanal oder eine Anforderung zum Anmelden beim Multicast-Dienstkanal ist,
im Fall einer Anmeldeanforderung anschließend
6) zu beurteilen (308), ob die angeforderte Multicast-Gruppe des Multicast-Dienstkanals existiert, im Fall "ja" mit Schritt 7) fortzufahren und im Fall "nein" mit Schritt 8) fortzufahren,
7) den Benutzer der Benutzerliste der Multicast-Gruppe hinzuzufügen (309), woraufhin das Verfahren endet,
8) die Multicast-Gruppe zu erstellen (310), die Gruppe in einen aktiven Zustand zu versetzen, den Benutzer der Benutzerliste der Multicast-Gruppe hinzuzufügen und zugleich eine Anforderung zum Anmelden beim Multicast-Dienstkanal an das Netzwerk zu senden (311), woraufhin das verfahren endet.

7. Verfahren gemäß Anspruch 1, wobei das Verfahren das Protokoll IGMP (Internet Group Management Protocol) zum Implementieren des Multicast-Dienstes verwendet.

8. Netzwerk-Zugangsvorrichtung, die den Multicast-Dienst unterstützt, beinhaltend ein Netzwerk-Schnittstellenmodul und ein Benutzer-Schnittstellenmodul, wobei das Netzwerk-Schnittstellenmodul ferner eine Einheit zum Behandeln einer Anforderung eines Benutzers zum Verlassen einer Multicast-Gruppe eines Multicast-Dienstkanals beinhaltet, wobei die besagte Einheit dafür ausgelegt ist, den Benutzer, der die Anforderung sendet, aus einer Benutzerliste der angeforderten Multicast-Gruppe zu löschen, wobei die besagte Einheit dafür ausgelegt ist, zu beurteilen, ob der Benutzer der letzte Benutzer der Multicast-Gruppe des Multicast-Dienstkanals ist, wobei die besagte Einheit dafür ausgelegt ist, die Multicast-Gruppe für eine Reservezeitspanne in einen unbenutzten Zustand zu versetzen, wenn der Benutzer, der die Abmeldeanforderung über das Benutzer-Schnittstellenmodul sendet, der letzte Benutzer der Multicast-Gruppe des Multicast-Dienstkanals ist, wobei die besagte Einheit dafür ausgelegt ist, zu beurteilen, ob eine Anforderung eines beliebigen Benutzers zum Anmelden bei der Multicast-Gruppe innerhalb der Reservezeitspanne empfangen wird, wobei die besagte Einheit dafür ausgelegt ist, die multicast-Gruppe in einen aktiven Zustand zu versetzen und den Benutzer der Benutzerliste der Multicast-Gruppe hinzuzufügen, wenn ein beliebiger Benutzer innerhalb der Reservezeitspanne über das Benutzer-Schnittstellenmodul eine Anmeldung beim Multicast-Dienstkanal anfordert, wobei ansonsten die besagte Einheit dafür ausgelegt ist, die Multicast-Gruppe zu löschen und über das Netzwerk-Schnittstellenmodul eine Anforderung zum Verlassen des Multicast-Dienstkanals an das Netzwerk zu senden.

9. Netzwerk-Zugangsvorrichtung gemäß Anspruch 8, wobei für den Fall, dass die Bandbreite der Netzwerkschnittstelle nicht ausreicht, die besagte Einheit zum Behandeln einer Anforderung eines Benutzers zum Verlassen eines multicast-Dienstkanals dafür ausgelegt ist, einige im unbenutzten Zustand befindliche Multicast-Gruppen zu löschen.

10. Netzwerk-Zugangsvorrichtung gemäß Anspruch 8, wobei die Einheit zum Behandeln einer Anforderung eines Benutzers zum Verlassen eines Multicast-Dienstkanals beinhaltet:
Erste Beurteilungsmittel, die dafür ausgelegt sind, zu beurteilen, ob der Benutzer, der die Abmeldeanforderung über das Benutzer-Schnittstellenmodul sendet, der letzte Benutzer der Multicast-Gruppe des Multicast-Dienstkanals ist,
zweite Beurteilungsmittel, die dafür ausgelegt sind, zu beurteilen, ob irgendein Benutzer innerhalb der Reservezeitspanne eine Anmeldung beim Multicast-Dienstkanal über das Benutzer-Schnittstellenmodul anfordert,
erste Zustands-Einstellmittel, die dafür ausgelegt sind, die Multicast-Gruppe für die Reservezeitspanne in den unbenutzten Zustand zu versetzen, wenn ein Beurteilungsergebnis der ersten Beurteilungsmittel "ja" lautet, ferner den Zustand der Multicast-Gruppe vom unbenutzten Zustand in den aktiven Zustand zu ändern, wenn ein Beurteilungsergebnis der zweiten Beurteilungsmittel "ja" lautet, und den Zustand der Multicast-Gruppe am Ende der Reservezeitspanne vom unbenutzten Zustand in einen gelöschten Zustand zu ändern, wenn das Beurteilungsergebnis "ja" der zweiten Beurteilungsmittel nicht innerhalb der Reservezeitspanne empfangen wird, sowie
erste Netzwerkschnittstellenmittel, die dafür ausgelegt sind, eine Anforderung zum Verlassen des multicast-Dienstkanals entsprechend dem sich ändernden Ergebnis der ersten Zustands-Einstellmittel, das den Zustand der Multicast-Gruppe vom unbenutzten zustand in den gelöschten Zustand ändert, über das Netzwerk-Schnittstellenmodul an das Netzwerk zu senden.

11. Netzwerk-Zugangsvorrichtung gemäß Anspruch 8, wobei die Einheit zum Behandeln einer Benutzeranforderung dafür ausgelegt ist, zu beurteilen, ob die vom Benutzer über das Benutzer-Schnittstellenmodul empfangene Anforderung eine Anforderung zum Abmelden vom Multicast-Dienstkanal oder eine Anforderung zum Anmelden beim Multicast-Dienstkanal ist, wobei die Einheit für den Fall der Anmeldeanforderung dafür ausgelegt ist, die angeforderte Multicast-Gruppe zu erstellen, wenn sie nicht existiert, während sie die Anforderung zur Anmeldung beim Multicast-Dienstkanal über das Netzwerk-Schnittstellenmodul an das Netzwerk sendet.

12. Netzwerk-Zugangsvorrichtung gemäß Anspruch 11, wobei die Einheit zum Behandeln einer Benutzeranforderung beinhaltet:
Eine Einheit, die dafür ausgelegt ist, eine Benutzeranforderung zum Anmelden bei einem Multicast-Dienstkanal zu behandeln, und
Benutzeranforderungs-Beurteilungsmittel, die dafür ausgelegt sind, zu beurteilen, ob die vom Benutzer über das Benutzer-Schnittstellenmodul empfangene Anforderung eine Anforderung zum Abmelden vom Multicast-Dienstkanal oder eine Anforderung zum Anmelden beim Multicast-Dienstkanal ist, und festzulegen, ob die Einheit zur Behandlung einer Anforderung eines Benutzers zum Abmelden von einem Multicast-Dienstkanal oder die Einheit zur Behandlung einer Anforderung eines Benutzers zum Anmelden bei einem Multicast-Dienstkanal die Anforderung behandeln soll, wobei
die Einheit zur Behandlung einer Anforderung eines Benutzers zum Abmelden von einem Multicast-Dienstkanal beinhaltet:
Dritte Beurteilungsmittel, die dafür ausgelegt sind, zu beurteilen, ob die Multicast-Gruppe des angeforderten Multicast-Dienstkanals existiert,
zweite Zustands-Einstellmittel, die dafür ausgelegt sind, die Multicast-Gruppe zu erstellen, wenn das Beurteilungsergebnis der dritten Beurteilungsmittel "nein" lautet, und die Gruppe in den aktiven Zustand zu versetzen, sowie
zweite Netzwerkschnittstellenmittel, die dafür ausgelegt sind, die Anforderung zum Anmelden beim Multicast-Dienstkanal über das Netzwerk-Schnittstellenmodul an das Netzwerk zu senden, wenn das Beurteilungsergebnis der dritten Beurteilungsmittel "nein" lautet.

## Revendications

1. Méthode permettant de traiter une requête d'un utilisateur d'abandon d'un canal de multidiffusion au moyen d'un mécanisme d'abandon lent, comprenant les étapes suivantes :
1) suppression (201) de l'utilisateur qui envoie la requête d'une liste d'utilisateurs du groupe de multidiffusion demande ;
2) détermination (202) de si l'utilisateur est le dernier utilisateur du groupe de multidiffusion du canal de multidiffusion, si "non", alors fin de la méthode ; si "oui", établissement (203) du groupe de multidiffusion dans un état inutilisé pendant une période de temps de réserve, puis passage à l'étape 3) ;
3) détermination (204) de si une requête d'un quelconque utilisateur de liaison au canal de multidiffusion est reçue pendant la période de temps de réserve, si "oui", établissement (205) du groupe de multidiffusion dans un état actif et ajout de l'utilisateur dans la liste d'utilisateurs du groupe de multidiffusion, puis fin de la méthode ; si "non", passage à l'étape 4) ;
4) suppression (206) du groupe de multidiffusion, envoi d'une requête d'abandon du canal de multidiffusion au réseau, puis fin de la méthode.

2. Méthode selon la revendication 1, dans laquelle lors de l'étape 3), le groupe de multidiffusion est établi dans un état actif pendant que le temps de réserve est remis à zéro, aussitôt qu'une requête d'un quelconque utilisateur de liaison au canal de multidiffusion est reçue pendant la période de temps de réserve.

3. Méthode selon la revendication 1, dans laquelle ledit temps de réserve est réglé selon une priorité du groupe de multidiffusion, et un temps de réserve plus long est réglé pour un groupe de multidiffusion ayant une priorité plus élevée.

4. Méthode selon la revendication 1, comprenant en outre l'étape 5) : lorsque la bande passante de l'interface réseau n'est pas suffisante, suppression de certains groupes de multidiffusion dans l'état inutilisé.

5. Méthode selon la revendication 4, dans laquelle lors de l'étape 5), une séquence de suppression de certains groupes de multidiffusion dans l'état inutilisé est déterminée en fonction de leurs priorités, et un groupe de multidiffusion dans l'état inutilisé ayant une priorité plus basse est supprimé avant un groupe ayant une priorité plus élevée.

6. Méthode selon la revendication 1, comprenant en outre les étapes suivantes :
détermination (321) de si une requête de l'utilisateur est une requête d'abandon d'un canal de multidiffusion ou une requête de liaison à un canal de multidiffusion ;
si c'est une requête de liaison, alors
6) détermination (308) de si le groupe de multidiffusion du canal de multidiffusion existe, si "oui", passage à l'étape 7) ; si "non", passage à l'étape 8) ;
7) ajout (309) de l'utilisateur dans la liste d'utilisateurs du groupe de multidiffusion, puis fin de la méthode ;
8) création (310) du groupe de multidiffusion, établissement du groupe dans un état actif et ajout de l'utilisateur dans la liste d'utilisateurs du groupe de multidiffusion, et envoi simultanément (311) d'une requête de liaison au canal de multidiffusion au réseau, puis fin de la méthode.

7. Méthode selon la revendication 1, dans laquelle la méthode emploie le protocole IGMP pour mettre en oeuvre le service de multidiffusion.

8. Appareil d'accès au réseau qui supporte un service de multidiffusion, comprenant un module d'interface réseau et un module d'interface utilisateur, dans lequel l'appareil d'accès au réseau comprend en outre une unité destinée à traiter une requête d'un utilisateur d'abandon d'un groupe de multidiffusion d'un canal de multidiffusion, ladite unité étant adaptée pour supprimer l'utilisateur qui envoie la requête d'une liste d'utilisateurs du groupe de multidiffusion demandé, ladite unité étant adaptée pour juger si l'utilisateur est le dernier utilisateur du groupe de multidiffusion du canal de multidiffusion, ladite unité étant adaptée pour établir le groupe de multidiffusion dans un état inutilisé pendant une période de temps de réserve si l'utilisateur qui envoie la requête d'abandon via le module d'interface utilisateur est le dernier utilisateur du groupe de multidiffusion du canal de multidiffusion, ladite unité étant adaptée pour juger si une requête d'un quelconque utilisateur de liaison au groupe de multidiffusion est reçue pendant la période de temps de réserve, ladite unité étant adaptée pour établir le groupe de multidiffusion dans un état actif et pour ajouter l'utilisateur dans la liste du groupe de multidiffusion si un quelconque utilisateur demande à joindre le canal de multidiffusion via le module d'interface utilisateur pendant la période de temps de réserve, sinon, ladite unité étant adaptée pour supprimer le groupe de multidiffusion et pour envoyer au réseau une requête d'abandon du canal de multidiffusion via le module d'interface réseau.

9. Appareil accès au réseau selon la revendication 8, dans lequel lorsque la bande passante de l'interface réseau n'est pas suffisante, ladite unité de traitement d'une requête d'un utilisateur d'abandon d'un canal de multidiffusion est adaptée pour supprimer certains groupes de multidiffusion dans l'état inutilisé.

10. Appareil accès au réseau selon la revendication 8, dans lequel l'unité qui traite une requête d'un utilisateur d'abandon d'un canal de multidiffusion comprend :
un premier moyen de détermination adapté pour déterminer si l'utilisateur qui envoie la requête d'abandon via le module d'interface utilisateur est le dernier utilisateur du groupe de multidiffusion du canal de multidiffusion demandé;
un second moyen de détermination adapté pour déterminer s'il existe un quelconque utilisateur demandant à joindre le canal de multidiffusion via le module d'interface utilisateur pendant la période de temps de réserve ;
un premier moyen de réglage d'état adapté pour établir le groupe de multidiffusion dans l'état inutilisé pendant la période de temps de réserve si un résultat de la détermination du premier moyen de détermination est "oui", pour faire passer le groupe de multidiffusion de l'état inutilisé à l'état actif si un résultat de la détermination du second moyen de détermination est "oui", et pour faire passer le groupe de multidiffusion de l'état inutilisé à un état supprimé à la fin du temps de réserve si le résultat de la détermination "oui" du second moyen de détermination n'est pas reçu pendant la période de temps de réserve ;
un premier moyen d'interface réseau adapté pour envoyer la requête d'abandon du canal de multidiffusion au réseau via le module d'interface réseau en fonction du résultat de changement du premier moyen de réglage d'état qui fait passer le groupe de multidiffusion de l'état inutilisé à l'état supprimé.

11. Appareil accès au réseau selon la revendication 8, dans lequel l'unité qui traite une requête d'un utilisateur est adaptée pour déterminer si la requête de l'utilisateur reçue via le module d'interface utilisateur est une requête d'abandon du canal de multidiffusion ou une requête de liaison au canal de multidiffusion, dans le cas d'une requête de liaison, si le groupe de multidiffusion demandé n'existe pas, l'unité est adaptée pour créer le groupe de multidiffusion, tout en envoyant au réseau la requête de liaison au canal de multidiffusion via le module d'interface réseau.

12. Appareil accès au réseau selon la revendication 11, dans lequel l'unité qui traite une requête d'un utilisateur comprend :
une unité adaptée pour traiter une requête d'un utilisateur de liaison à un canal de multidiffusion ; et
un moyen de détermination de requête d'utilisateur adaptée pour déterminer si la requête de l'utilisateur reçue via le module d'interface utilisateur est une requête d'abandon du canal de multidiffusion ou une requête de liaison au canal de multidiffusion, et qui détermine laquelle parmi l'unité qui traite une requête d'utilisateur d'abandon du canal de multidiffusion et l'unité qui traite une requête d'utilisateur de liaison au canal de multidiffusion va traiter la requête ; dans laquelle
l'unité qui traite une requête d'utilisateur de liaison au canal de multidiffusion comprend :
un troisième moyen de détermination qui détermine si le groupe de multidiffusion du canal de multidiffusion demandé existe ;
un second moyen de réglage d'état qui crée le groupe de multidiffusion si le résultat de la détermination du troisième moyen de détermination est "non", et qui établit le groupe dans l'état actif ;
un second moyen d'interface réseau qui envoie la requête de liaison au canal de multidiffusion au réseau via le module d'interface réseau si le résultat de la détermination du troisième moyen de détermination est "non".
